# FASCICULE DE BREVET EUROPEEN

(11) **EP 0 897 793 B1**
(45) Date de publication et mention de la délivrance du brevet: **29.05.2002**
(21) Numéro de dépôt: 98402016.4
(22) Date de dépôt: 07.08.1998
(51) Int. Cl.: B32B 5/26, E02B 3/12

(54) **Structure géotextile de filtration**
Geotextile Filterstruktur
Geotextile filter structure

(30) Priorité: 13.08.1997 FR 9710325
(43) Date de publication de la demande: 24.02.1999
(73) Titulaire: Bidim Geosynthetics S.A., 95873 Bezons Cedex (FR)
(72) Inventeur: Delmas, Philippe, 78330 Fontenay le Fleury (FR); Artieres Olivier, 78500 Sartrouville (FR)
(74) Mandataire: Le Bras, Hervé

(56) Documents cités:
- EP-A- 0 390 755
- EP-A- 0 459 203
- EP-A- 0 564 799
- DE-U- 9 320 208

## Description

La présente invention a pour objet une structure géotextile de filtration.

De façon plus précise, l'invention concerne une structure géotextile remplissant les fonctions standard pour de telles structures, c'est-à-dire la stabilisation des sols ou d'autres matériaux équivalents et qui présente de plus des propriétés de filtration pour ne laisser passer que des liquides imprégnant le sol et non le sol lui-même ou d'autres types de déchets.

Les structures géotextiles utilisées pour filtrer les sols sont bien connues. Le plus souvent, elles sont constituées par des couches tissées ou non tissées de filaments ou de fibres de matériaux synthétiques tels que le polypropylène, la présence de cette structure au contact du sol, ou enfouie dans le sol assurant la stabilité de celui-ci.

La présente invention concerne une structure de ce type qui, de plus, présente des caractéristiques telles qu'elles permettent une filtration des liquides présents dans le terrain.

La technique de filtration à l'aide de géotextiles existe depuis longtemps. Le principe consiste à retenir le sol à filtrer tout en laissant passer l'eau sans perte de charge ou avec une perte de charge aussi réduite que possible. Compte tenu de la granulométrie des sols naturels, il n'est pas possible de retenir toutes les particules du sol. C'est pourquoi le dimensionnement actuel de tels filtres n'a pour objectif que de retenir le squelette du sol. Il s'agit des plus grosses particules du sol qui peuvent retenir les particules les plus fines par création d'un "auto-filtre" au sein du sol. Ce mécanisme suppose donc que dans le géotextile, les particules les plus fines passent à travers celui-ci sans le colmater. Il en va de même pour les particules de sol en suspension qui peuvent entrer en contact avec le géotextile lors de la mise en oeuvre par exemple en présence de boue.

Il est généralement admis que par leur comportement tridimensionnel, les géotextiles aiguilletés ont les meilleures performances. Cependant, comme cela a été démontré, il convient que le produit géotextile, pour remplir ses fonctions de filtration, possède un nombre minimum de constrictions, (c'est-à-dire d'espaces créés par trois filaments ou plus à travers lesquels la particule de sol doit passer) dans son épaisseur afin d'avoir une grande homogénéité statistique d'ouvertures de filtration locales.

Cependant, il s'avère qu'afin de résister aux agressions lors de la mise en oeuvre d'un tel géotextile de filtration, on est amené à augmenter la masse du produit utilisé pour obtenir l'épaisseur nécessaire après l'endommagement résultant de la mise en oeuvre. L'augmentation de cette masse, combinée au nombre minimum de constrictions nécessaires, a pour effet d'augmenter considérablement le risque de colmatage interne du produit. On comprend qu'un tel colmatage réduit considérablement les propriétés de filtre de la texture géotextile.

Un objet de la présente invention est de fournir une structure géotextile qui remplisse effectivement la fonction de filtration souhaitée tout en permettant une protection mécanique de la structure suffisante pour en assurer l'intégrité lors de sa mise en oeuvre.

Pour atteindre ce but selon l'invention, la structure géotextile de filtration des sols se caractérise en ce qu'elle comprend :
- une couche inférieure de matériau géotextile de filtrage présentant un nombre de constrictions n compris entre 15 et 40 et réalisée avec des filaments ou fibres synthétiques présentant un titre D (decitex) ; et
- une couche supérieure de matériau géotextile de protection mécanique présentant dans son épaisseur des constrictions plus ouvertes que les constrictions de la couche inférieure afin d'éviter les risques de colmatage de la couche inférieure et réalisée avec des filaments ou fibres synthétiques présentant un titre au moins égal à 2D (decitex), lesdites couches supérieure et inférieure étant solidaires l'une de l'autre.

Par exemple, ce titre est égal à 4D (decitex).

On comprend que grâce à la combinaison de la couche inférieure de filtration, qui est optimisée en vue de cette fonction, la structure globale réalise effectivement la fonction de filtration dans les conditions souhaitées. On comprend également que grâce à la couche supérieure de matériau synthétique qui présente une masse par unité de surface adaptée à la résistance souhaitée, on réalise la protection mécanique de la couche inférieure de filtration tout en évitant les risques de colmatage de la couche de filtration.

Selon une caractéristique préférée, le nombre de constrictions de la couche inférieure est compris entre 20 et 35.

Egalement de préférence, le titre des filaments de la couche supérieure est compris entre 3D (decitex) et 4D (decitex).

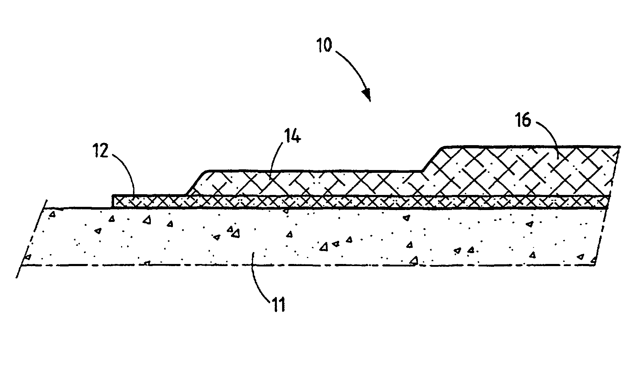

D'autres caractéristiques et avantages de l'invention apparaîtront mieux à la lecture de la description qui suit d'un mode de réalisation de l'invention donné à titre d'exemple non limitatif. La description se réfère à la figure unique annexée sur laquelle :
on a représenté en coupe verticale un exemple de réalisation de la structure géotextile de filtrage.

En se référant à la figure unique annexée, on va décrire un mode préféré de réalisation de la structure géotextile remplissant la fonction de filtrage.

Sur cette figure, on a représenté une portion de la structure géotextile 10 disposée sur un sol à filtrer 11. Selon une caractéristique essentielle de l'invention, la structure géotextile est constituée par une première couche inférieure géotextile 12 remplissant la fonction de filtration et une couche supérieure 14 également réalisée en géotextile et remplissant essentiellement une fonction de protection mécanique de la couche inférieure 12 de filtration.

La couche inférieure 12 est optimisée pour remplir de façon optimale la fonction de filtration des sols de telle manière que cette couche laisse passer les liquides et retienne les particules solides formant le squelette du sol. Pour ce faire, la couche géotextile 12 est réalisée à partir de filaments ou de fibres synthétiques et notamment de polypropylène de telle manière que cette couche présente, dans son épaisseur, un nombre de constrictions compris entre 15 et 40 et de préférence compris entre 20 et 35. Comme on l'a déjà indiqué, le nombre de constrictions est le nombre d'espaces créés par les filaments de la structure en trois dimensions entre la face supérieure et la face inférieure de celle-ci. Les expériences montrent que pour un nombre de constrictions compris entre 20 et 35, on obtient un effet optimal de filtration du sol. De préférence également, la couche inférieure est réalisée avec des filaments correspondants à un titre compris avantageusement entre 3 et 5 decitex.

La couche supérieure 14 qui remplit essentiellement une fonction de protection mécanique de la couche inférieure 12 est réalisée également à l'aide de filaments ou de filtres synthétiques, notamment de polypropylène, qui présentent des constrictions nettement plus ouvertes que la partie de la couche inférieure 12. En outre, cette couche 14 est réalisée à partir de filaments dont le diamètre est très sensiblement supérieur à celui de la couche inférieure. Le titre (en decitex) de ces filaments est de l'ordre de 2 à 4 fois supérieur à celui des filaments de la couche inférieure et de préférence de l'ordre de 3 à 4 fois celui-ci. En d'autres termes, la structure géotextile constituant la couche supérieure 14 présente avantageusement un nombre de decitex compris entre 12 et 20.

A titre d'exemple, la couche inférieure 12 de filtrage a une épaisseur comprise entre 1,5 et 2,5 mm. De même, la couche supérieure 14 présente une épaisseur comprise, de préférence, entre 1,5 et 6 mm. Les deux couches sont liées lors de leur fabrication.

Comme le montre la figure unique, il est possible de prévoir pour la couche supérieure 14 une masse par unité de surface et une épaisseur adaptées au niveau de protection souhaitée. Par exemple, dans la zone où celle-ci devra supporter un enrochement dans le cas de la protection d'une rivière, d'un lac, ou d'un ouvrage maritime, l'épaisseur pourra être plus importante dans la zone 16.

On comprend à la lecture de la description précédente, que la structure géotextile 10 comporte une couche inférieure 12 qui est optimisée pour remplir sa fonction de filtration alors que la couche supérieure 14 sert de protection mécanique. La couche supérieure 14 présente des constrictions plus ouvertes par rapport à la couche inférieure de telle manière que, malgré le diamètre sensiblement supérieur des filaments la constituant, elle ne risque pas de produire de phénomène de colmatage, cette situation rendant caduque la fonction de filtration de la couche inférieure.

## Revendications

1. Structure géotextile de filtration des sols, **caractérisée en ce qu'**elle comprend :
- une couche inférieure (12) de matériau géotextile de filtration présentant dans son épaisseur un nombre de constrictions n compris entre 15 et 40 et réalisée avec des filaments ou fibres synthétiques présentant un titre D (decitex) ; et
- une couche supérieure (14) de matériau géotextile de protection mécanique présentant dans son épaisseur des constrictions plus ouvertes que les constrictions de la couche inférieure, afin d'éviter les risques de colmatage de la couche inférieure, et réalisée avec des filaments ou fibres synthétiques présentant un titre au moins égal à 2D, lesdites couches supérieure et inférieure étant solidaires l'une de l'autre.

2. Structure géotextile selon la revendication 1, **caractérisée en ce que** le nombre de constrictions de la couche inférieure (12) est compris entre 20 et 35.

3. Structure géotextile selon l'une quelconque des revendications 1 et 2, **caractérisée en ce que** le titre des filaments de la couche supérieure est compris entre 3D et 4D (decitex).

4. Structure géotextile selon l'une quelconque des revendications 1 à 3, **caractérisée en ce que** la couche inférieure est réalisée avec des filaments dont le titre est compris entre 3 et 5 decitex et que la couche supérieure est réalisée avec des filaments dont le titre est compris entre 12 et 20 decitex.

5. Structure géotextile selon l'une quelconque des revendications 1 à 4, **caractérisée en ce que** la couche supérieure présente une masse par unité de surface adaptée au niveau de protection souhaité.

## Patentansprüche

1. Geotextile Bodenfilterstruktur,
**dadurch gekennzeichnet, dass** sie folgendes umfasst:
- eine untere Schicht (12) aus geotextilem Filtermaterial, die in der Dicke eine Anzahl n Verengungen aufweist, die zwischen 15 und 40 liegt, und mit synthetischen Filamenten oder Fasern mit einer Feinheit D (Dezitex) ausgeführt ist; und
- eine obere Schicht (14) aus geotextilem Material zum mechanischen Schutz, die in der Dicke Verengungen aufweist, die eine größere Weite haben als die der unteren Schicht, und die mit synthetischen Filamenten oder Fasern mit einer Feinheit von wenigstens 2D ausgeführt ist, wobei die obere mit der unteren Schicht fest verbunden ist.

2. Geotextilstruktur nach Anspruch 1,
**dadurch gekennzeichnet, dass** die Anzahl der Verengungen der unteren Schicht (12) zwischen 20 und 35 liegt.

3. Geotextilstruktur nach einem der Ansprüche 1 oder 2,
**dadurch gekennzeichnet, dass** die Feinheit der Filamente der oberen Schicht zwischen 3D und 4D (Dezitex) liegt.

4. Geotextilstruktur nach einem der Ansprüche 1 bis 3,
**dadurch gekennzeichnet, dass** die untere Schicht mit Filamenten ausgeführt ist, deren Feinheit zwischen 3 und 5 Dezitex liegt, und dass die obere Schicht mit Filamenten ausgeführt ist, deren Feinheit zwischen 12 und 20 Dezitex liegt.

5. Geotextilstruktur nach einem der Ansprüche 1 bis 4,
**dadurch gekennzeichnet, dass** die obere Schicht eine Masse pro Flächeneinheit aufweist, die dem gewünschten Schutzniveau angepasst ist.

## Claims

1. A geotextile structure for filtering liquid from soil, **characterised in that** it comprises:
- a lower layer (12) of geotextile material for filtration presenting in its thickness a number of constrictions n included between 15 and 40 and made of synthetic filaments or fibres presenting a count D (decitex); and
- an upper layer (14) of geotextile material for mechanical protection, presenting in its thickness constrictions more open than the constrictions of the lower layer for avoiding clogging of the lower layer, and made of synthetic filaments or fibres presenting a count at least equal to 2D, said upper and lower layers being bonded to each other.

2. The geotextile structure according to claim 1, **characterised in that** the number of constrictions of the lower layer (12) is included between 20 and 35.

3. The geotextile structure according to claim 1 or 2, **characterised in that** the count of the filaments of the upper layer is included between 3D and 4D (decitex).

4. The geotextile structure according to any one of claims 1 to 3, **characterised in that** the lower layer is made of filaments presenting a count of between 3 and 5 decitex and **in that** the upper layer is made of filaments presenting a count of between 12 and 20 decitex.

5. The geotextile structure according to any one of claims 1 to 4, **characterised in that** the upper layer presents a mass per surface unit that is adapted to the desired level of protection.
